# EUROPÄISCHE PATENTSCHRIFT

(11) **EP 2 582 273 B1**
(45) Veröffentlichungstag und Bekanntmachung des Hinweises auf die Patenterteilung: **27.05.2015**
(21) Anmeldenummer: 11732344.4
(22) Anmeldetag: 15.06.2011
(51) Int. Cl.: A47J 31/46, A47J 31/54, A47J 31/56

(54) **KAFFEEMASCHINE MIT EINER BRÜHVORRICHTUNG UND MIT EINEM DER BRÜHVORRICHTUNG NACHGEORDNETEN KAFFEE-NACHERHITZER**
COFFEE MACHINE HAVING A BREWING DEVICE AND HAVING A COFFEE POST-HEATER ARRANGED DOWNSTREAM OF THE BREWING DEVICE
MACHINE À CAFÉ PRÉSENTANT UN DISPOSITIF DE PERCOLATION ET UN RÉCHAUFFEUR DE CAFÉ MONTÉ EN AVAL DU DISPOSITIF DE PERCOLATION

(30) Priorität: 15.06.2010 EP 10405116
(43) Veröffentlichungstag der Anmeldung: 24.04.2013
(73) Patentinhaber: JURA Elektroapparate AG, 4626 Niederbuchsiten (CH)
(72) Erfinder: BÜTTIKER, Philipp, CH-4625 Oberbuchsiten (CH)
(74) Vertreter: EGLI-EUROPEAN PATENT ATTORNEYS
(86) Internationale Anmeldenummer: PCT/CH2011/000143
(87) Internationale Veröffentlichungsnummer: WO 2011/156929

(56) Entgegenhaltungen:
- WO-A1-2004/006739
- WO-A1-2006/122720

## Beschreibung

Die Erfindung betrifft eine Kaffeemaschine mit Brühvorrichtung zum Bereiten und Ausgeben eines gebrühten Kaffeegetränks mit einer Brühvorrichtung und ein Verfahren zum Brühen und Ausgeben eines gebrühten Kaffeegetränkes mit einer derartigen Kaffeemaschine.

Die Erfindung betrifft insbesondere eine Brühvorrichtung zum Brühen eines Kaffeegetränkes mit einer Brüheinheit, wobei die Brüheinheit eingangsseitig mit einer Brühwasser-Zufuhrleitung und ausgangsseitig mit einer Kaffee-Ausgabeleitung verbunden ist.

Eine Brühvorrichtung für Kaffee, welcher eingangsseitig heisses Brühwasser zugeführt wird und welche an ihrem Ausgang während des Brühvorgangs bzw. nach dessen Beendigung fertig gebrühten Kaffee ausgibt, ist an sich bekannt. Eine derartige Brühvorrichtung wird zumeist mit Heisswasser bzw. Brühwasser gespeist, welches aus einem Wassertank kommend zunächst mit Hilfe von Pumpen- oder ähnlichen Einrichtungen durch einen Durchlauferhitzer geleitet und dort erhitzt wird. Weiterhin sind auch solche Brühvorrichtungen bekannt, bei welchen das Brühwasser in einem grösseren Brühwassertank zunächst komplett erhitzt und dann der Brüheinheit zugeleitet wird. In jedem Fall durchläuft das Brühwasser nach dem Erhitzungsvorgang dann noch eine mehr oder weniger lange Leitungsstrecke, bis der Eingang der Brühvorrichtung erreicht ist.

Hierbei ergibt sich insbesondere das Problem, dass die Leitungsstrecke, die zwischen der Brühwasserheizeinrichtung und dem Eingang der Brüheinheit liegt, je nach Art, Zeitpunkt und Häufigkeit vorausgegangener Brühvorgänge unterschiedliche Temperaturen aufweisen kann. Damit kann nicht vorausgesagt werden, welche Brühwassertemperatur am Eingang der Brüheinheit tatsächlich zur Verfügung steht. Dies ist insofern von Nachteil, als dass eine zu hohe Brühtemperatur vermehrt Bitterstoffe beispielsweise aus dem aufzubrühenden Kaffee extrahiert, wodurch der ausgegebene Kaffee bitter schmeckt.

Andererseits ist eine zu niedrige Brühtemperatur ebenso wenig wünschenswert, da in diesem Fall die gewünschten Aromen nicht aus dem Kaffeemehl gelöst werden und der ausgegebene Kaffee demnach eher fad schmeckt. Brühtemperaturen im Bereich von 90 bis 95°C gelten im Allgemeinen als ideal.

Zu diesem bekannten Problem sind aus dem Stand der Technik mehrere Lösungen bekannt, um die eingangsseitige Brühwassertemperatur an der Brüheinheit unter Berücksichtigung des zusätzlichen Leitungswegs zwischen der Brühwasser-Erhitzungseinrichtung und der eigentlichen Brüheinheit bei Bedarf weiter zu erhöhen.

Aus der US-Patentschrift 6,701,068 B2 ist beispielsweise eine Brühwasser-Hilfserhitzungseinrichtung bekannt, welche unmittelbar vor einem Bereich angeordnet ist, aus welchem das fertig erhitzte Brühwasser ausgegeben wird. In Flussrichtung vor der besagten Brühwasser-Hilfserhitzungseinrichtung befindet sich die eigentliche Brühwasser-Haupterhitzungseinrichtung, welche eingangsseitig kaltes Frischwasser bezieht, erhitzt und anschliessend an ihrem Ausgang einem Leistungs- oder Rohrstück zuleitet, welches sie mit der Brühwasser-Hilfserhitzungseinrichtung verbindet. Eine mögliche unerwünschte Abkühlung des aufgebrühten Wassers vor dem Brühvorgang findet genau in diesem Leitungs- bzw. Rohrstück statt und wird von der Brühwasser-Hilfserhitzungseinrichtung wieder ausgeglichen, so dass genügend heisses Brühwasser zum Brühen zur Verfügung steht.

Eine ähnliche Lösung ist aus der US-Offenlegungsschrift 2005/0066820 A1 bekannt, wobei hier in einem Boiler vorerhitztes Brühwasser auf dem Weg zum Eingang der Brüheinheit ebenfalls durch ein weiteres als Durchlauferhitzer ausgebildetes Heizelement hindurchgeleitet wird, wobei in diesem Fall eine bedarfsweise Ansteuerung des zusätzlichen Heizelements mit Hilfe einer Steuereinheit vorgenommen wird. Das erhitzte Brühwasser wird über eine Brühwasser-Zufuhrleitung unter einem Druck in eine automatisch mit gemahlenem Kaffee füllbare Brühkammer der Brüheinheit eingeleitet, sodass in der Brühkammer insbesondere gebrühter Kaffee in Form von Espresso herstellbar ist. Der gebrühte Kaffee wird im vorliegenden Fall über eine Kaffee-Ausgabeleitung einer Düse zur Abgabe von Kaffee zugeleitet und dort über eine Austrittsöffnung der Düse aus der Kaffeemaschine ausgegeben, wobei die Kaffee-Ausgabeleitung mit einem ihrer beiden Enden an einen Ausgang der Brühkammer angeschlossen ist und ihr anderes Ende in die Düse mündet, sodass die Kaffee-Ausgabeleitung eine durchgehende, die Brühkammer mit der Austrittsöffnung der Düse verbindende Fluidverbindung bildet.

Aus der US-Offenlegungsschrift 2008/0008461 A1 ist eine Lösung bekannt, bei welcher die Brühwassertemperatur mit Hilfe einer einzigen Brühwasser-Erhitzungsvorrichtung durch Zwischenschaltung eines Temperatursensors in den Brühwasserpfad zwischen dem Brühwasser-Erhitzer und der Brüheinheit durch Regelung konstant gehalten wird. Auch bei dieser aus dem Stand der Technik bekannten Lösung wird also versucht, die Brühwassertemperatur am Eingang der Brüheinheit durch Regelung auf einem konstanten Wert zu halten.

Eine weitere Anordnung ist aus der WO 2004/006739 A1 bekannt.

Schliesslich ist aus der DE 699 11 675 T2 eine Anordnung bekannt, bei welcher die Brüheinheit - in diesem Fall die Brüheinheit einer Kaffeemaschine zum Bereiten von Espresso - aus einer Betriebsstellung in eine Ruhestellung schwenkbar ist. Nach dem Schwenken in die Ruhestellung liegt ein wärmeübertragender Bereich der Brüheinheit an einem Heizelement an. Im Zuge des nachfolgenden Brühvorgangs wird die so (in der Ruhestellung) erwärmte Brüheinheit wieder in ihre Betriebsposition zurückverschwenkt, und kann somit eine ggf. zu niedrige Temperatur des zugeführten Brühwassers kompensieren. Das erwärmte Brühwasser wird im vorliegenden Fall unter Druck in eine Brühkammer der Brüheinheit eingeleitet, sodass in der Brühkammer gebrühter Kaffee in Form von Espresso herstellbar ist, wobei der gebrühte Kaffee über ein Rohr aus der Brühkammer abfliessen und aus der Kaffeemaschine abgegeben werden kann.

Eine besondere Herausforderung im Hinblick auf eine Reproduzierbarkeit des Geschmacks von gebrühten Kaffeegetränken stellen Kaffeemaschinen mit Brühvorrichtungen dar, bei welchen das in der jeweiligen Brühvorrichtung gebrühte Kaffeegetränk über eine relativ lange Kaffee-Ausgabeleitung dem Kaffee-Auslass der Kaffeemaschine zugeführt werden muss. Dies trifft beispielsweise zu bei automatischen Kaffeemaschinen, bei welchen der im Brühwasser zu brühende Kaffee automatisch einer Brühkammer einer Brüheinheit zugeführt wird und anschliessend mit unter Druck stehendem Brühwasser gebrüht wird, um beispielsweise Espresso zu bereiten. In derartigen Kaffeemaschinen muss das erhitzte Brühwasser bzw. das jeweils gebrühte Kaffeegetränk meist über relativ grosse Distanzen in Leitungen geführt werden, bevor das jeweils gebrühte Kaffeegetränk von der Kaffeemaschine abgegeben werden kann. Dabei können - über die gesamte Länge der Leitungen verteilt - relativ grosse Wärmeverluste auftreten, deren Grösse zudem, stark schwanken kann. Mehre nacheinander zubereitete Kaffeegetränke können deshalb hinsichtlich ihrer Temperatur und hinsichtlich ihres Geschmacks stark variieren.

Der vorliegenden Erfindung liegt die Aufgabe zugrunde, die vorstehend genannten Nachteile zu vermeiden und eine Kaffeemaschine mit einer insbesondere zur Bereitung von Espresso geeigneten Brühvorrichtung d anzugeben, mit welcher in einer einfach zu realisierenden, aber dennoch effektiven Weise eine stets optimale Qualität des ausgegebenen Kaffeegetränkes sichergestellt werden kann.

Eine weitere Aufgabe ist darin zu sehen, ein entsprechendes Verfahren zum Brühen und Ausgeben eines Kaffeegetränkes mit stets optimaler Qualität anzugeben.

Im Hinblick auf die Kaffeemaschine wird die der Erfindung zugrunde liegende Aufgabe durch den Gegenstand des 1 gelöst.

Die Kaffeemaschine zum Bereiten eines gebrühten Kaffeegetränks und zum Ausgeben des gebrühten Kaffeegetränks über mindestens einen Kaffee-Auslass weist eine Brühvorrichtung zum Bereiten des gebrühten Kaffeegetränks durch Brühen einer vorgegebenen Menge Kaffee in unter Druck stehendem Brühwasser auf, wobei die Brühvorrichtung eine Brüheinheit mit einer Brühkammer zur Aufnahme der vorgegebenen Menge Kaffee, eine mit der Brüheinheit verbundene, in die Brühkammer mündende Brühwasser-Zufuhrleitung zum Zuführen des Brühwassers in die Brühkammer und eine Einrichtung zum Einleiten des Brühwassers in die Brühkammer umfasst. Dabei ist die Einrichtung zum Einleiten des Brühwassers dazu ausgebildet, das Brühwasser unter Druck durch die Brühwasser-Zufuhrleitung in die Brühkammer einzuleiten. Weiterhin weist die Brühkammer einen Ausgang für das gebrühte Kaffeegetränk auf, und die Brühvorrichtung umfasst eine Kaffee-Ausgabeleitung, welche eine durchgehende Fluidverbindung für das gebrühte Kaffeegetränk zwischen dem Ausgang der Brühkammer und dem Kaffee-Auslass bildet. Dabei weist die die Kaffee-Ausgabeleitung ein erstes Ende auf, welches an den Ausgang der Brühkammer angeschlossen ist und einen mit dem Ausgang der Brühkammer in Fluidverbindung stehenden Eingang zur Aufnahme des gebrühten Kaffeegetränks umfasst. Weiterhin weist die Kaffee-Ausgabeleitung ein zweites Ende auf, welches einen mit dem Kaffee-Auslass in Fluidverbindung stehenden Ausgang zur Ausgabe des gebrühten Kaffeegetränks umfasst.

Gemäss der Erfindung weist die Brühvorrichtung einen Kaffee-Nacherhitzer zum Nacherhitzen des jeweils gebrühten Kaffeegetränks in der Kaffee-Ausgabeleitung auf, wobei der Kaffee-Nacherhitzer zwischen dem Ausgang der Brühkammer und dem Kaffee-Auslass angeordnet ist und als Durchlauferhitzer zum Erhitzen des gebrühten Kaffeegetränks während eines Durchlaufs des gebrühten Kaffeegetränks durch die Kaffee-Ausgabeleitung ausgebildet ist.

Ein wesentlicher Punkt der Erfindung besteht darin, dass der Kaffee-Nacherhitzer zwischen dem Ausgang der Brühkammer und dem Kaffee-Auslass der Kaffeemaschine, beispielsweise an oder in der Kaffee-Ausgabeleitung, angeordnet ist und das gebrühte Kaffeegetränk mittels des Kaffee-Nacherhitzers erhitzt werden kann, wenn es sich in der Kaffee-Ausgabeleitung befindet bzw. die Kaffee-Ausgabeleitung in Richtung auf den ausgabeseitigen Endbereich der Kaffee-Ausgabeleitung durchströmt. Hierdurch kann der eigentliche Brühvorgang in der Brüheinheit bei der optimalen Brühtemperatur durchgeführt werden, ohne dass die Gefahr besteht, dass sich das gebrühte Getränk - beispielsweise durch eine längere Betriebspause - nach dem Austreten aus der Brüheinheit auf dem Weg bis in eine Kaffee-Ausgabeeinrichtung soweit abkühlen kann, dass die geschmackliche Qualität des gebrühten Getränks beeinträchtigt wird.

Zwar wurde im Stand der Technik bereits das Problem erkannt, dass sich eine zu niedrige Brühtemperatur bzw. eine stark schwankende Brühtemperatur negativ auf die Qualität des aus der Brüheinheit austretenden aufgebrühten Getränks, im Regelfall Kaffee, auswirken kann. Allerdings wurde bisher nicht erkannt, dass nach erfolgtem Brühen und bei Austritt aus der Brüheinheit das gebrühte Getränk im Regelfall durch zusätzliche Leitungen hindurch einer Kaffee-Ausgabeeinheit zugeführt werden muss, was sich wieder negativ auf die Qualität des aufgebrühten Getränks auswirken kann, da die Gefahr besteht, dass das Getränk vor der Ausgabe aus der Kaffee-Ausgabeeinheit wieder abkühlt.

Hierbei ist zu berücksichtigen, dass die Temperatur des am Ende der Kaffee-Ausgabeeinheit ausgegebenen Kaffeegetränks letztlich wiederum davon abhängt, auf welchem Temperaturniveau sich diese hinter der Brüheinheit liegenden Leitungen bzw. die Kaffee-Ausgabeeinrichtung befinden. Insbesondere wird die geschmackliche Qualität des gebrühten Getränks negativ beeinflusst, wenn dessen Temperatur zu niedrig liegt. Im Falle von Kaffee wird z.B. eine Temperatur des ausgegebenen Kaffees von 80 bis 85 °C angestrebt. Diese (Ideal-)Temperatur wird häufig insbesondere dann unterschritten, wenn die hinter dem Ausgang der Brüheinheit liegenden Teile, also die Kaffee-Ausgabeleitung und die zugehörige Kaffee-Ausgabeeinrichtung, z.B. nach einer längeren Betriebspause der Kaffeemaschine bis auf Zimmertemperatur abgekühlt sind.

In einer vorteilhaften Ausführungsform der Kaffeemaschine ist es beispielsweise vorgesehen, den Kaffee-Nacherhitzer dann in Betrieb zu setzen, wenn nach einem erfolgten Brühvorgang gebrühter Kaffee aus der Brüheinheit in die Kaffee-Ausgabeleitung eintritt. Auf diese Weise ist gewährleistet, dass der Nacherhitzer nur dann in Betrieb ist, wenn auch tatsächlich ein gebrühtes Getränk ausgegeben werden soll, was insbesondere aus Gründen der Energieersparnis von Vorteil ist. Zu diesem Zweck ist es vorteilhaft, den Nacherhitzer möglichst so auszubilden, dass er einerseits die in der Regel mit einem Heizelement erzeugte Wärme gut an die Kaffee-Ausgabeleitung überträgt und andererseits seinerseits eine kleine Masse aufweist, damit er im Sinne einer möglichst steilen Regelkurve bzw. kurzen Totzeit möglichst dynamisch auf eine Wiederinbetriebnahme nach einer möglichen Brühpause reagieren kann.

Gemäss einer weiteren Ausführungsform der vorliegenden Erfindung kann es aber gleichsam ebenso von Vorteil sein, den Kaffee-Nacherhitzer dann in Betrieb zu setzen, wenn das Zuführen von gebrühtem Kaffee aus der Brühvorrichtung in die Kaffee-Ausgabeleitung bereits beendet ist. Diese Möglichkeit kommt insbesondere unmittelbar nach dem Ende eines Brühvorgangs in Betracht, wenn sich noch Reste des aufgebrühten Getränks in der Kaffee-Ausgabeleitung befinden. In diesem Fall soll mit einem genügend lang andauernden Inbetriebsetzen des Nacherhitzers in der Kaffee-Ausgabeleitung eine Dampfblase erzeugt werden, welche bewirkt, dass sich in diesem Bereich der Kaffee-Ausgabeleitung ein Überdruck ausbildet. Hierdurch wird die sich noch in der Kaffee-Ausgabeleitung befindende Flüssigkeit in Richtung Kaffee-Ausgabeeinrichtung ausgetrieben, wodurch einerseits eine nahezu vollständige Ausgabe des aufgebrühten Getränks in die Tasse erreicht werden kann und andererseits eine längere Standzeit von älterem gebrühten Getränk in der Kaffee-Ausgabeleitung vermieden wird. Hierdurch ist dann auch gewährleistet, dass in einem nachfolgenden Brühvorgang nahezu keine Reste aus dem vorhergehenden Brühvorgang in die Ausgabeeinrichtung und damit in die Tasse gelangen. Dies ist einerseits wünschenswert, da natürlich auch diese Brühreste ihrerseits abkühlen können und damit die Temperatur des ausgegebenen gebrühten Getränks negativ beeinflussen können und andererseits - beispielsweise bei längeren Betriebspausen - ein Oxidieren bzw. Verderben dieser Brühreste in der Kaffee-Ausgabeleitung wirkungsvoll verhindert werden kann. Zu diesem Zweck kann es sinnvoll sein, den Nacherhitzer möglichst unmittelbar benachbart am ausgabeseitigen Ende der Brüheinheit anzuordnen, damit die durch den Betrieb des Kaffee-Nacherhitzers beeinflusste Strecke der Kaffee-Ausgabeleitung und damit die Strecke, die wirkungsvoll durch Dampfblasenbildung entleert werden kann, möglichst einen Grossteil der Gesamtstrecke der Kaffee-Ausgabeleitung zwischen der Brüheinheit und der Ausgabeeinrichtung ausmacht.

In einer konkreten Ausgestaltung der Brühvorrichtung ist vorgesehen, dass der Nacherhitzer ein Rohr aufweist, wobei benachbart zu dem Rohr ein Heizelement verläuft. Dieses Heizelement weist seinerseits Stromanschlüsse auf, wobei nach Anlegen einer elektrischen Spannung die eingesetzte Energie in Wärme umgesetzt wird und sich das Heizelement aufheizt. Das Rohr wird in den Flüssigkeitspfad der Kaffee-Ausgabeleitung eingesetzt und weist dafür einen Kaffee-Zufuhranschluss sowie einen Kaffee-Ausgabeanschluss auf, welche in jeweils gegenüberliegenden Enden des Rohres münden. Selbstverständlich ist es aber ebenso denkbar, den Nacherhitzer in Form eines extern aufgebrachten Heizelements auszubilden, welches auf eine bestehende, durchgehende Kaffee-Ausgabeleitung unter Ausbildung eines ausreichenden Wärmekontakts beispielsweise durch Kleben oder Schweissen aufgebracht wird.

Ferner kann aber auch das erwähnte Rohr, welches in den Flüssigkeitspfad der Kaffee-Ausgabeleitung eingesetzt wird, mit dem benachbart verlaufenden Heizelement zumindest bereichsweise fest verbunden werden. Hierbei ist es wiederum insbesondere denkbar, das Rohr und das Heizelement bereichsweise zu verschweissen oder zu verkleben, um einen guten Wärmekontakt zu gewährleisten.

In einer weiteren konkreten, bevorzugten Ausgestaltung des Nacherhitzers der Brühvorrichtung ist zusätzlich zu dem Rohr und dem benachbart dazu verlaufenden Heizelement ferner ein Gehäuse vorgesehen, welches aus einem möglichst gut wärmeleitenden Material besteht. Zu diesem Zweck kommt insbesondere Aluminium in Betracht, jedoch sind auch weitere die Wärme gut leitende Materialien denkbar. Das Gehäuse kann dabei insbesondere ein Gussgehäuse sein, welches durch zumindest bereichsweises Umgiessen des Rohres und des Heizelements ausgebildet wird. Durch das Vorsehen eines Gehäuses für den Nacherhitzer wird nicht nur die mechanische Stabilität verbessert, durch die wärmespeichernden und wärmeleitenden Eigenschaften des verwendeten Materials wird insbesondere sichergestellt, dass im Zuge der Wärmeübertragung des Heizelements auf das Rohr möglichst geringe Wärmeverluste auftreten.

In einer konkreten Ausgestaltung der vorliegenden Erfindung ist das Rohr des Heizelements aus Chromstahl oder aus Aluminium gefertigt, wodurch eine definierte Wärmeübertragung von dem benachbart verlaufenden Heizelement auf das Rohr gewährleistet ist.

In einer weiteren konkreten Ausgestaltung der vorliegenden Erfindung ist vorgesehen, dass das als elektrische Widerstandsheizung ausgebildete Heizelement als keramische Dickschichtheizung ausgeführt ist. Hierzu wird das Heizelement auf einem keramischen Substrat aufgebracht, welches eine gewisse Dicke und damit eine begrenzte Wärmespeicherkapazität aufweist. Hierdurch ist durch eine relativ geringe Verzögerung im Regelverhalten des Heizelements ein gleichmässiger Wärmeübergang der durch das Heizelement erzeugten Wärme auf das benachbart verlaufende Rohr möglich. Selbstverständlich ist es jedoch ebenso denkbar, das Heizelement als gewöhnlichen PTC-Heizwiderstand (Heizwiderstand mit positivem TemperaturKoeffizienten) auszuführen. Im Falle der Verwendung eines gewöhnlichen PTC-Heizwiderstands kann bei vorab festgelegter Dimensionierung in vorteilhafter Weise erreicht werden, dass ohne zusätzliche Regelelemente eine Eigenregelung der Heiztemperatur erfolgt.

Weitere Einzelheiten der vorliegenden Erfindung werden anhand einer beispielhaften Ausführungsform einer Kaffeemaschine anhand der beigefügten Zeichnungen erläutert.

Es zeigen:
- Fig. 1: den schematischen Aufbau einer erfindungsgemässen Kaffeemaschine mit einer eine Brüheinheit umfassenden Brühvorrichtung;
- Fig. 2: die Brüheinheit gemäss Fig. 1, in einem Längsschnitt; und
- Fig. 3: eine dreidimensionale Ansicht eines in der Kaffeemaschine gemäss Fig. 1 zum Einsatz kommenden Kaffee-Nacherhitzers.

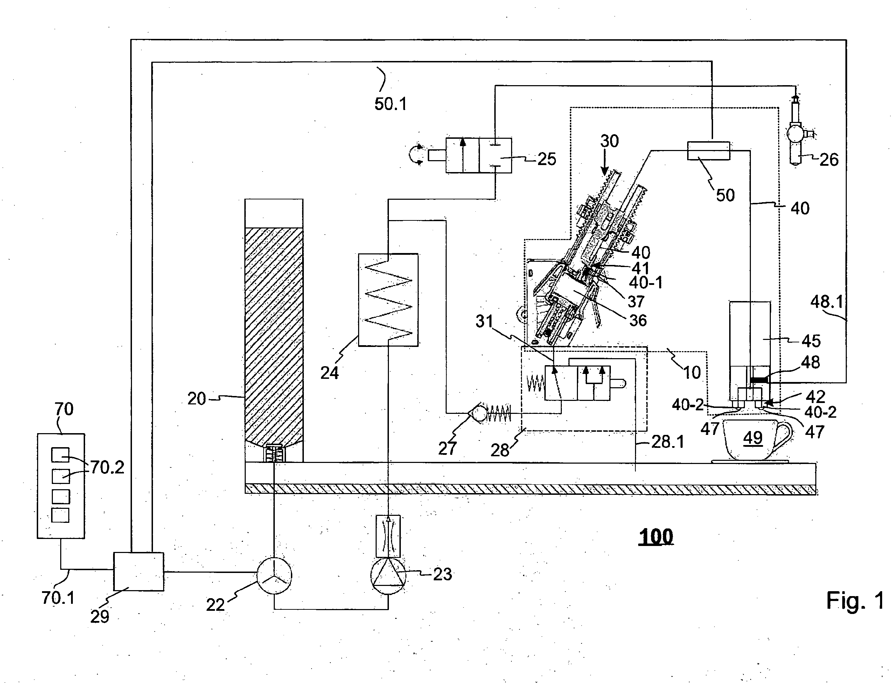

Die Figur 1 zeigt das Prinzipbild einer erfindungsgemässen Kaffeemaschine 100 mit einer Brühvorrichtung 10, wobei die Brühvorrichtung 10 in der gezeigten beispielhaften Ausführungsform aus einer Brüheinheit 30, einem Kaffee-Nacherhitzer 50 sowie einer Kaffee-Ausgabeleitung 40 besteht.

Die Kaffee-Ausgabeleitung 40 verbindet die Brüheinheit 30 mit einer Kaffee-Ausgabeeinrichtung 45 und weist einen mit der Brüheinheit 30 verbundenen brüheinheitsseitigen Endbereich 41 sowie einen mit einer Kaffee-Ausgabeeinrichtung 45 verbundenen ausgabeseitigen Endbereich 42 auf. Der brüheinheitsseitige Endbereich 41 grenzt an ein erstes Ende 40-2 der Kaffee-Ausgabeeinrichtung 45 an, welches der Aufnahme eines in der Brüheinheit gebrühten Kaffeegetränks dient. Im vorliegenden Beispiel ist die Kaffee-Ausgabeleitung 40 im ausgabeseitigen Endbereich 42 verzweigt und weist zwei dem ersten Ende 40-1 gegenüberliegende zweite Enden 40-2 auf, welche in zwei nebeneinander angeordnete Kaffee-Ausgangsöffnungen 47 münden, durch welche ein in der Brüheinheit 30 gebrühtes Kaffeegetränk aus der Kaffee-Ausgabeleitung 40 fliessen kann, beispielsweise in ein unter den Kaffee-Ausgangsöffnungen 47 angeordnetes Trinkgefäss 49. In der gezeigten beispielhaften Ausführungsform ist der Kaffee-Nacherhitzer 50 in dem brüheinheitsseitigen Endbereich 41 angeordnet. Eingangsseitig ist die Brühvorrichtung 10 mit einer Brühwasser-Zufuhrleitung 31 verbunden, durch welche zum Zwecke des Brühens eines Kaffeegetränks in der Brüheinheit 30 dieser Brüheinheit 30 erhitztes Brühwasser zugeführt wird. Das Brühwasser in der Brühwasser-Zufuhrleitung weist dabei eine für das Brühen des jeweiligen Kaffeegetränks geeignete Temperatur, vorzugsweise im Bereich zwischen 90 und 95 °C auf. Die erforderliche Brühwassertemperatur in der Brühwasser-Zufuhrleitung 31 wird dabei durch Erhitzen in einem Brühwassererhitzer 24 gewährleistet. Dem Brühwassererhitzer 24 wird zu diesem Zweck Frischwasser aus einem Wassertank 20 zugeführt, wobei in der gezeigten beispielhaften Ausführungsform der benötigte Wasserdruck von einer Pumpe 23, welche zwischen dem Wassertank 20 und dem Brühwassererhitzer 24 angeordnet ist, aufgebaut wird.

Weiterhin ist ein Durchflussmesser 22 vorgesehen, welcher im Frischwasserweg zwischen dem Wassertank 20 und dem Brühwassererhitzer 24 angeordnet sein kann, um eine Information über die der Brühvorrichtung zugeführten Menge an erhitztem Frischwasser, also Brühwasser zur Verfügung zu stellen. Bei Erkennen einer positiven Durchflussmenge durch den Durchflussmesser 22 kann darauf geschlossen werden, dass momentan ein Brühvorgang stattfindet, und bei Nichterkennen einer Durchflussmenge kann aus dieser Information entsprechend abgeleitet werden, dass kein Brühvorgang stattfindet. Ein ähnlicher Durchflussmesser kann selbstverständlich auch zwischen dem Brühwassererhitzer 24 und der Brüheinheit 30 angeordnet sein. Weiterhin ist es denkbar, zusätzlich oder ausschliesslich einen ähnlichen Durchflussmesser in der Kaffee-Ausgabeleitung 40 anzuordnen. In diesen Fällen kann es erforderlich sein, diese ähnlichen Durchflussmesser auf höhere Flüssigkeitstemperaturen und/oder hinsichtlich der Verschmutzungsanfälligkeit durch Ablagerungen entsprechend robuster auszulegen.

Die Information, dass ein Brühvorgang stattfindet, wie auch die Information, dass ein Brühvorgang nicht stattfindet bzw. beendet wurde, kann ebenso gut mittels anderer Messeinrichtungen, beispielsweise Drucksensoren erfolgen. Weiterhin kann diese Information, insbesondere bei Integration der erfindungsgemässen Brühvorrichtung in automatisch arbeitende Kaffeemaschinen, durch die Programmablaufsteuerung dieser automatischen Kaffeemaschine oder des Kaffeeautomaten zur Verfügung gestellt werden.

Gemäss der beschriebenen Ausführungsform ist eine Steuereinheit 29 der Kaffeemaschine 100 mit der beschriebenen Einrichtung zum Erkennen einer Wasserzufuhr zu der Brüheinheit 30, d.h. dem Durchflussmesser 22, verbunden. Die Steuereinheit 29 weist ausserdem eine Verbindung 50.1 zu dem Kaffee-Nacherhitzer 50 auf und ist dazu ausgelegt, den Kaffee-Nacherhitzer 50 über die Verbindung 50.1 in Betrieb zu nehmen bzw. ausser Betrieb zu setzen. Dieses Aktivieren des Kaffee-Nacherhitzers 50 erfolgt nach einer entsprechenden Beurteilung der von dem Durchflussmesser 22 erhaltenen Information, d.h. nach einer Beurteilung, ob ein Brühvorgang stattfindet (das Durchlaufen von Wasser wird erkannt) oder nicht. Um eine Information darüber zu erhalten, ob ein Brühvorgang kürzlich abgeschlossen wurde sowie zum Einstellen einer möglichen Nachlaufzeit des Kaffee-Nacherhitzers 50 kann die Steuereinheit 29 ausserdem einen Zeitgeber aufweisen.

In die Brühwasser-Zufuhrleitung 31, d.h. in den Leitungsweg zwischen Brühwassererhitzer 24 und Brüheinheit 30, kann ein Auslaufventil 27 eingebaut sein, welches nach dem Aufbau eines entsprechenden Brühwasserdrucks durch die Pumpe 23 den Durchflusspfad des Brühwassers in Richtung der Brüheinheit 30 freigibt. Nach Beendigung eines Brühvorgangs und damit nach Abschalten der Pumpe 23 ist dann durch die entsprechende Rückschlagfunktion des Auslaufventils 27 gewährleistet, dass kein Brühwasser oder allenfalls geringe Mengen Brühwasser durch die Brühwasser-Zufuhrleitung 31 wieder in Richtung Brühwasser-Erhitzer 24 zurückfliessen.

Weiterhin kann eine Drainageventil-Einheit 28 in der Brühwasser-Zufuhrleitung zwischen dem Auslaufventil 27 und der Brüheinheit 30 vorgesehen sein, wobei beispielsweise nach Umschalten der Drainageventil-Einheit 28 (aus der in Fig. 1 dargestellten Stellung in eine andere Stellung) eine Verbindung zwischen der Brühwasser-Zufuhrleitung 31 und einer Drainageleitung 28.1 hergestellt werden kann, sodass beispielsweise nach dem Brühen eines Kaffeegetränks jeweils überschüssiges Brühwasser aus der Brüheinheit 30 der Drainageleitung 28.1 zugeführt werden kann und über die Drainageleitung 28.1 (in einen in Fig. 1 nicht dargestellten Behälter) abgeführt werden kann.

Ferner kann ein mit dem Ausgang des Brühwasser-Erhitzers 24 verbundenes Umschaltventil 25 vorgesehen sein, welches mit einer Aufschäumeinrichtung 26 zum Bereiten von Milchschaum verbunden ist.

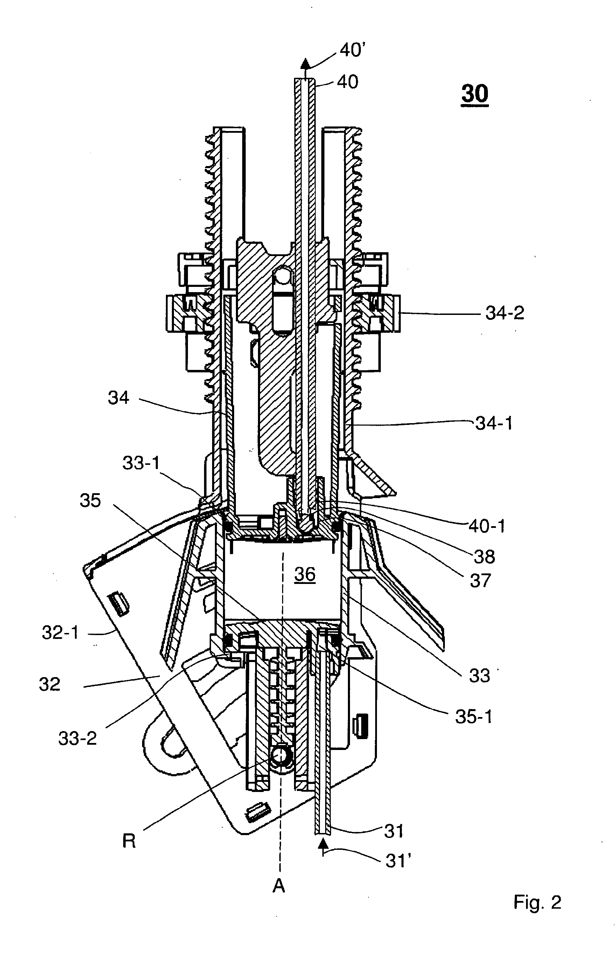

Einzelheiten der Brüheinheit 30 sind aus Fig. 2 ersichtlich. Die Brüheinheit 30 ist ausgelegt zum vollautomatischen Bereiten von gebrühten Kaffeegetränken, insbesondere Espresso, und hinsichtlich ihrer Konstruktion auf Konzepten, welche beispielsweise aus EP 0 559 620 oder EP 2 196 116 bekannt sind. Die Brüheinheit 30 umfasst eine Reihe von Komponenten, welche an einer Tragstruktur 32 befestigt sind und zusammen mit der Tragstruktur 32 als Ganzes in die Kaffeemaschine 100 montiert werden können. Die Brüheinheit 30 umfasst insbesondere einen Brühzylinder 33, welcher an der Tragstruktur 32 derart gelagert ist, dass er um eine (in Fig. 6 senkrecht zur Zeichenebene gerichtete) Drehachse R schwenkbar ist. Dadurch ist es möglich, den Brühzylinder 33 (mittels eines in _Fig. 2 nicht dargestellten Antriebs) in zwei verschiedenen Stellungen zu schwenken. Fig. 2 zeigt den Brühzylinder 33 in einer Stellung, in welcher die Brüheinheit 30 zum Bereiten eines gebrühten Kaffeegetränks bereit ist. In dieser Stellung ist der Brühzylinder 33 derart positioniert, dass ein Ende eines Brühkolbens 34, welcher in der Längsrichtung einer an der Tragstruktur befestigten Führung 34-1 linear beweglich und mittels eines Antriebs 34-2 entlang der Führung 34-1 bewegbar ist, entlang einer Längsachse A des Brühzylinders 33 durch eine an einem Ende des Brühzylinders 32 ausgebildete Öffnung 33-1 in den Brühzylinder 33 bewegt werden kann, sodass diese Öffnung 33-1 durch den Brühkolben 34 dicht verschlossen ist. Der Brühzylinder weist an einem der Öffnung 33-1 gegenüberliegenden Ende eine zweite Öffnung 33-2 auf, welche mittels eines entlang der Längsachse A des Brühzylinders 33 bewegbaren Kolbens 35 dicht verschlossen ist. Während des Brühens von Kaffee sind der Brühkolben 34 und der Kolben 35 derart relativ zum Brühzylinder 34 positioniert, dass in dem Brühzylinder 33 zwischen dem Brühkolben 34 und dem Kolben 36 eine Brühkammer 36 ausgebildet ist.

Um mit der Brüheinheit 30 ein Kaffeegetränk bereiten zu können, muss zunächst gewährleistet sein, dass die Brühkammer 36 mit Kaffeepulver gefüllt ist. Wie aus Fig. 2 ersichtlich, mündet ein Ende der Brühwasser-Zufuhrleitung 31 in einen im Kolben 35 ausgebildeten Brühwasser-Kanal 35-1, welcher über mehrere (in Fig. 2 nicht dargestellten Öffnungen) mit der Brühkammer 36 verbunden ist. Über die Brühwasser-Zufuhrleitung 31 kann heisses Brühwasser unter Druck in Brühkammer 36 geleitet werden (wie in Fig. 2 durch einen Pfeil 31' angedeutet ist). Wie Fig. 2 weiterhin andeutet, ist in den Brühkolben 34 ein Ausgang 37 der Brühkammer 36 integriert. Durch den Ausgang 37 kann ein in der Brühkammer 36 gebrühtes Kaffeegetränk die Brühkammer 36 verlassen. Wie aus Fig. 2 ersichtlich, ist das Ende 40-1 der Kaffee-Ausgabeleitung 40 an den Ausgang 37 angeschlossen, sodass das gebrühte Kaffeegetränk an diesem Ende 40-1 in die Kaffee-Ausgabeleitung 40 strömen und zu den Kaffee-Ausgangsöffnungen 47 der Kaffeemaschine 100 strömen kann (wie in Fig. 2 durch einen Pfeil 40' angedeutet ist). Wie Fig. 2 weiter andeutet, ist im Ausgang 38 der Brühkammer 36 ein Ventil 38 platziert. Das Ventil 38 ist derart ausgelegt, dass es den Ausgang 37 der Brühkammer 36 verschlossen hält, solange der Druck des Brühwassers in der Brühkammer 36 einen vorgegebenen Mindestwert unterschreitet, und den Ausgang 37 zur Abgabe eines gebrühten Kaffeegetränks (z.B. Espresso) freigibt, wenn der Druck des Brühwassers in der Brühkammer 36 den vorgegebenen Mindestwert überschreitet.

Um die Brühkammer 36 vor dem Bereiten eines Kaffeegetränks mit Kaffeepulver zu füllen oder nach dem Bereiten eines Kaffeegetränks das zum Brühen des Kaffeegetränks verwendete Kaffeepulver wieder aus dem Brühzylinder 33 zu entfernen, kann der Brühzylinder 33 an einen Seitenrand 32-1 der Tragstruktur 32 geschwenkt werden. Zu diesem Zweck muss zunächst der Brühkolben 34 mittels des Antriebs 34-2 derart entlang der Führung 34-1 bewegt werden, dass der Brühkolben 34 nicht mehr in den Brühzylinder 33 ragt und die Öffnung 33-1 nicht verschliesst. Ist der Brühzylinder 33 zum Seitenrand 32-1 der Tragstruktur 32 geschwenkt, so ist die Öffnung 33-1 des Brühzylinders 33 frei zugänglich, sodass wahlweise gebrühtes Kaffeepulver (mit Hilfe des Kolbens 35) durch die Öffnung 33-1 (beispielsweise automatisch) entfernt oder zum Brühen bestimmtes Kaffeepulver durch die Öffnung 33-1 in den Brühzylinder 33 (beispielsweise automatisch) gefüllt werden kann.

Das Ventil 38 kann derart ausgelegt sein, dass Kaffeepulver in der Brühkammer 36 mit Brühwasser unter einem Druck von 5 Bar oder einem grösseren Druck gebrüht werden kann. Entsprechend kann die Pumpe 23 derart ausgelegt sein, dass Brühwasser mit einem Druck von 5 Bar oder einem grösseren Druck in die Brühkammer eingeleitet werden kann. Unter diesen Voraussetzungen ermöglicht die Brüheinheit 30 insbesondere die Bereitung eines gebrühten Kaffeegetränks in Form von Espresso.

Der Ablauf eines Brühvorgangs eines Kaffeegetränks gemäss der vorliegenden Erfindung wird im Folgenden beispielhaft anhand der in Fig. 1 gezeigten Ausführungsform näher erläutert.

Nach Inbetriebnahme der Pumpe 23 wird Frischwasser aus dem Wassertank 20 in Richtung des Brühwassererhitzers 24 gefördert, wobei die Menge durchlaufenden Wassers vom Durchflussmesser 22 erfasst und diese Information der Steuereinheit 29 zugeleitet wird. Der Brühwasser-Erhitzer 24 erhitzt das durch ihn laufende Frischwasser auf die zum Brühen des Kaffeegetränks erforderliche Temperatur, welche im Regelfall zwischen 90 und 95 °C liegt. Das Umschaltventil 25 ist in einer Weise geschlossen, dass kein erhitztes Brühwasser bzw. Dampf der Aufschäumeinrichtung 26 zugeführt wird. Demnach erstreckt sich der Flüssigkeitspfad des erhitzten Brühwassers hinter dem Brühwasser-Erhitzer 24 in Richtung auf das Auslaufventil 27, welches durch den sich aufbauenden Druckgradienten den Flüssigkeitspfad in der Brühwasser-Zufuhrleitung 31 in Richtung Drainageventil-Einheit 28 freigibt. Das Drainageventil ist entsprechend so geschaltet, dass das durchlaufende Brühwasser dem Eingang der Brüheinheit 30, welche Bestandteil der Brühvorrichtung 10 ist, zugeführt wird.

Durch entsprechende Präparation, z.B. durch Befüllen der Brühkammer 36 mit Kaffeepulver, befindet sich die Brüheinheit 30 zu Beginn des Brühvorgangs in einem brühbereiten Zustand. Das entsprechend temperierte Brühwasser, welches am Eingang der Brüheinheit 30 anliegt, wird innerhalb der Brüheinheit 30 nun dazu verwendet, das Kaffeegetränk zu bereiten und an den Ausgang 37 der Brühkammer 36 auszugeben. Dieses Zuleiten gebrühten Kaffeegetränks kann in einem einfachen Durchleiten des Brühwassers durch das Kaffeepulver mit entsprechender anschliessender Filterung bestehen. Es ist natürlich ebenso denkbar, dass die Bereitung des Kaffeegetränks in der Brüheinheit auf eine andere Weise erfolgt.

Das gebrühte Kaffeegetränk fliesst anschliessend in die Kaffee-Ausgabeleitung 40, an welcher der Kaffee-Nacherhitzer 50 angeordnet ist. Das fertig gebrühte Kaffeegetränk, welches dem Kaffee-Nacherhitzer 50 zugeleitet wird, weist unter anderem durch die Dauer des Brühvorgangs sowie eventuelle Wärmeverluste innerhalb der Brüheinheit 30 gegebenenfalls eine Temperatur auf, welche niedriger als die optimale Trinktemperatur des Kaffeegetränks ist. Als optimale Trinktemperatur kann beispielsweise ein Temperaturbereich von 80 bis 85 °C angesehen werden.

Daher wird bei erfolgender Kaffeeausgabe der Kaffee-Nacherhitzer 50, dessen Aufbau im Folgenden noch näher erläutert wird, in Betrieb gesetzt. Der Kaffee-Nacherhitzer 50 erhitzt dann das Kaffeegetränk in der Kaffee-Ausgabeleitung 40 auf eine Temperatur, welche derart hoch ist, dass gewährleistet ist, dass das Kaffeegetränk nach der Ausgabe in ein Trinkgefäss eine Temperatur annimmt, welche im Bereich der optimalen Trinktemperatur liegt. Aus der Kaffee-Ausgabeleitung 40 läuft das auf optimale Trinktemperatur erhitzte Kaffeegetränk anschliessend in die Kaffee-Ausgabeeinrichtung 45, welche dazu dient, den Kaffee möglichst gleichmässig und weitgehend ohne Spritzer über die Kaffee-Ausgangsöffnungen 47 in ein darunter angeordnetes Trinkgefäss 49 auszugeben.

Bei Abschluss des Brühvorgangs, d.h. wenn beispielsweise mittels des Durchflussmessers 22 ermittelt wurde, dass eine ausreichende Menge an Brühwasser der Brüheinheit 30 zugeführt wurde, werden der Brühwasser-Erhitzer 24 sowie die Pumpe 23 ausser Betrieb gesetzt, und der Durchfluss durch die Brühvorrichtung 10 wird unterbrochen. Es ist nun durch entsprechendes Auswerten des Zeitgebers der Steuereinheit 29 möglich, den Kaffee-Nacherhitzer 50 für eine begrenzte Zeit auch nach Abschluss des Brühvorgangs in Betrieb zu belassen bzw. nochmals in Betrieb zu setzen. Da keine weitere Flüssigkeit der Kaffee-Ausgabeleitung 40 zugeführt wird, wird damit die sich in der Kaffee-Ausgabeleitung 40 befindliche Restflüssigkeit weiter erhitzt. Durch Ausdehnung dieser, ggf. auch durch Ausbilden einer Dampfblase in unmittelbarer Nähe des brüheinheitsseitigen Endbereichs 41 der Kaffee-Ausgabeleistung 40 führt dieses Vorgehen zu einem Druckaufbau innerhalb der Kaffee-Ausgabeleitung 40, wodurch Restflüssigkeit, in diesem Falle also Reste des gerade frisch gebrühten Kaffeegetränks, in Richtung der Kaffee-Ausgabeeinrichtung 45 und somit in das Trinkgefäss ausgetrieben werden. Hierdurch ist gewährleistet, dass der Verbleib einer Restmenge gebrühten Kaffees in der Kaffee-Ausgabeleitung 40 weitgehend unterbunden wird. Dies ist einerseits wünschenswert, um bei einem möglichen anschliessendem Brühvorgang kein oder nur wenig in der Kaffee-Ausgabeleitung verbliebenes und ggf. abgekühltes Restgetränk der Kaffee-Ausgabeeinrichtung 45 zuzuführen, was die Getränketemperatur weiter herabsetzen würde. Andererseits ist dies auch aus hygienischen Gründen sinnvoll, da somit die Gefahr, dass bei längerer Standzeit die in der Kaffee-Ausgabeleitung 40 befindlichen Getränkereste verderben, verringert werden kann.

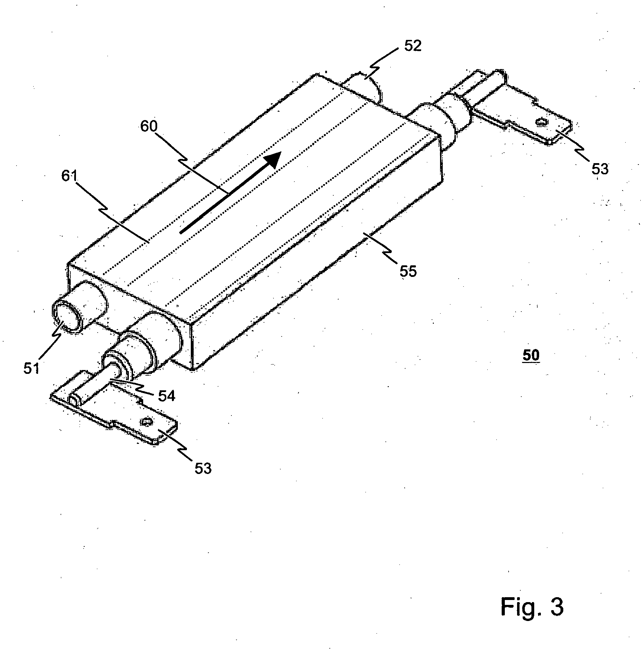

Fig. 3 zeigt eine perspektivische Ansicht eines Kaffee-Nacherhitzers 50, wie er beispielsweise in der in Verbindung mit Fig. 1 erläuterten Kaffeemaschine 100 zum Einsatz kommen kann.

Wie in Fig. 3 erkennbar, weist der Kaffee-Nacherhitzer 50 ein Gehäuse 55 auf, welches vorzugsweise aus einem möglichst gut wärmeleitenden Material, beispielsweise Aluminium besteht. Wird dieses Gehäuse 55 im Gussverfahren gefertigt, kann es insbesondere als massiver Block ausgebildet sein, wobei das Material, also das Aluminium, ein eingebettetes längliches Heizelement 54 sowie ein benachbart dazu verlaufendes Rohr 61 umschliesst.

Das das Gehäuse 55 durchdringende Rohr 61 stellt den Durchflusspfad des nachzuerhitzenden Getränks dar, wobei die Durchflussrichtung durch einen mit dem Bezugszeichen 60 versehenen Pfeil angedeutet ist. Der Verlauf des Rohrs 61 im Inneren des Gehäuseblocks 55 ist in Fig. 3 schematisch durch parallel zueinander verlaufende gepunktete Linien angedeutet.

Das Rohr weist einen Zufuhranschluss 51 sowie einen Ausgabeanschluss 52 auf, wobei die Anschlüsse dazu dienen, den Kaffee-Nacherhitzer 50 in eine Kaffee-Ausgabeleitung 40 einzubauen. Die Kaffee-Ausgabeleitung 40 kann beispielsweise aus zwei Schläuche umfassen, wobei die beiden Schläuche derart dimensioniert sind, dass ein Ende des einen Schlauchs auf den Zufuhranschluss 51 steckbar ist und das andere Ende dieses einen Schlauchs den brüheinheitsseitigen Endbereich 41 der Kaffee-Ausgabeleitung 40 bildet und ein Ende des anderen Schlauchs auf den Ausgabeanschluss 52 steckbar ist und das andere Ende dieses anderen Schlauchs den ausgabeseitigen Endbereich 42 der Kaffee-Ausgabeleitung 40 bildet. Alternativ kann der Zufuhranschluss 51 des Kaffee-Nacherhitzers 50 auch direkt mit der Brüheinheit 30 bzw. dem Ausgang 37 der Brühkammer 36 verbunden sein, sodass der Zufuhranschluss 51 den brüheinheitsseitigen Endbereich 41 der Kaffee-Ausgabeleitung 40 bildet.

Benachbart zum Rohr 61 verläuft ein elektrisches Widerstandsheizelement 54, dessen Verlauf im Inneren des Gehäuses 55 wiederum ebenfalls durch gepunktete Linien angedeutet ist. Zum Zwecke der Stromzufuhr weist das Heizelement 54, welches beispielsweise ein PTC-Heizwiderstand ist, Stromanschlüsse 53 auf. Es bedarf keiner weiteren Ausführung, dass das Heizelement 54 ggf. mit einer elektrischen Isolierung versehen ist, um ein unbeabsichtigtes Kurzschliessen des Strompfads über ein metallisches Gehäuse zu unterbinden.

Nach Anlegen einer entsprechenden elektrischen Spannung an die Stromanschlüsse 53 erwärmt sich das Heizelement 54 und gibt den grössten Teil der so erzeugten Wärme an das gut wärmeleitende Gehäuse 54 ab, womit wiederum eine Wärmeübertragung auf das Rohr 61 erfolgt. Eine durch das Rohr 61 laufende Flüssigkeit, gemäss der vorliegenden Erfindung also nachzuerhitzender Kaffee, wird dabei ebenfalls erwärmt.

Denkbar ist jedoch ebenfalls, das Rohr 61 sowie das Heizelement 54 nicht in einem wärmeleitenden Gehäuse 55 anzuordnen, sondern auf einer Strecke unmittelbar benachbart zueinander zu führen und unter Ausbildung eines wärmeleitenden Übergangs zu verbinden, z.B. zu verschweissen oder zu verkleben.

Ebenso ist die Formgebung des Rohres 61 sowie des Heizelements 54 und ggf. des Gehäuses 55 nicht auf einen im Wesentlichen geraden Verlauf beschränkt. Es ist vielmehr ebenso denkbar, einen solchen Kaffee-Nacherhitzer 50 in einer gebogenen Form, beispielsweise U-förmig gebogen, auszubilden.

Das Rohr 61, welches in der gezeigten Ausführungsform in Durchflussrichtung 60 nahezu vollständig von dem gut wärmeleitenden Material des Gehäuses 55 durch Umgiessen umgeben ist, besteht seinerseits aus Chromstahl oder aus Aluminium. Das Heizelement 54 ist im gezeigten Fall als Heizwiderstand, vorzugsweise als PTC-Heizwiderstand ausgebildet, kann jedoch ebenso beispielsweise als keramische Dickschichtheizung ausgebildet sein. In allen Fällen ist gewährleistet, dass beim Einsatz einer erfindungsgemässen Kaffeemaschine das auszugebende Getränk auch bei einem eventuellen Temperaturverlust während des Brühvorgangs auf eine Getränketemperatur gebracht werden kann, welche im Bereich der optimalen Trinktemperatur liegt.

Die Brühvorrichtung 10 kann derart ausgebildet sein, dass das Heizelement 54 beim Nacherhitzen des jeweils gebrühten Kaffeegetränks jeweils auf eine vorgegebene Temperatur erhitzt wird, wobei der jeweils durch das Heizelement 54 fliessende Strom von der Steuereinheit 29 entsprechend gesteuert wird. Die Temperatur des jeweils gebrühten Kaffeegetränks kann sich bei einem Durchlauf des Kaffeegetränks durch die Kaffee-Ausgabeleitung 40 auf dem Weg zwischen dem Kaffee-Nacherhitzer 50 und den jeweiligen Ausgangsöffnungen 47 verändern, wobei die jeweilige Veränderung der Temperatur des Kaffeegetränks von der momentanen Temperatur der Kaffee-Ausgabeleitung 40 im Bereich zwischen dem Kaffee-Nacherhitzer 50 und den jeweiligen Kaffee-Ausgangsöffnungen 47 abhängig ist. Um zu gewährleisten, dass die Temperatur eines von der Kaffee-Ausgabeeinrichtung 45 ausgegebenen Kaffeegetränks innerhalb vorgegebener Grenzen liegt, kann der jeweils durch das Heizelement 54 fliessende Strom beispielsweise in Abhängigkeit von der momentanen Temperatur der Kaffee-Ausgabeleitung 40 gesteuert werden.

Im vorliegenden Beispiel ist ein Temperatursensor 48 zur Bereitstellung eines Messwerts für eine Temperatur der Kaffeeleitung 46 am ausgabeseitigen Endbereich 42 der Kaffee-Ausgabeleitung 40, beispielsweise in der Nähe der Kaffee-Ausgangsöffnungen 47, angeordnet, wobei der Kaffee-Nacherhitzer 50 mittels der Steuereinheit 29 in Abhängigkeit von dem jeweils bereitgestellten Messwert für die jeweilige Temperatur der Ausgabeleitung (40) steuerbar ist. Zu diesem Zweck ist der Temperatursensor 48 mit der Steuereinheit 29 mittels einer in Fig. 1 dargestellten Verbindung 48.1 verbunden, sodass der Steuereinheit 29 eine Information über die jeweilige vom Temperatursensor 48 gemessene Temperatur der Kaffeeleitung 46 zur Verfügung steht und die Steuereinheit 29 den durch das Heizelement 54 fliessenden Strom in Abhängigkeit von Temperatur-Messwerten des Temperatursensors 48 steuern kann.

Der Temperatursensor 48 kann auch an einem anderen Ort an der Kaffeeleitung 46 platziert sein, beispielsweise an einem Bereich der Kaffee-Ausgabeleitung 40 zwischen dem Kaffee-Nacherhitzer 50 und dem ausgabeseitigen Endbereich 42 der Kaffee-Ausgabeleitung 40 oder am Kaffee-Nacherhitzer 50.

Alternativ können auch mehrere Temperatursensoren an der Kaffeeleitung 46 (entlang der Kaffeeleitung 46 verteilt) und/oder ein oder mehrere Temperatursensoren an der Kaffee-Ausgabeleitung 40 (zur Messung der Temperatur der Kaffee-Ausgabeleitung 40 an verschieden Orten) angeordnet sein, wobei die jeweiligen Temperatursensoren mit der Steuereinheit 29 verbunden sein können, sodass der Steuereinheit 29 eine Information über die von den jeweiligen Temperatursensoren gemessenen Temperaturen der Kaffee-Ausgabeleitung 40 zur Verfügung stehen und die Steuereinheit 29 den durch das Heizelement 54 fliessenden Strom in Abhängigkeit von den jeweiligen Temperatur-Messwerten der jeweiligen Temperatursensoren steuern kann.

Die Kaffeemaschine 100 kann derart ausgebildet sein, dass die Temperatur eines von der Kaffee-Ausgabeeinrichtung 45 ausgegebenen Kaffeegetränks von einem Benutzer beeinflussbar ist, wobei der Benutzer einen Sollwert der Temperatur, welche ein aus der KaffeeAusgabeleitung 40 ausgegebenes Kaffeegetränk aufweist, vor der Bereitung des jeweiligen Kaffeegetränks mit einem Vorwahlmittel auswählen kann. Zu diesem Zweck kann der Kaffee-Nacherhitzer 50 mittels der Steuereinheit 29 in Abhängigkeit von dem jeweils vorgewählten Sollwert steuerbar sein. Die Steuereinheit 29 kann insbesondere den durch das Heizelement 54 fliessenden Strom in Abhängigkeit von dem jeweils vorgewählten Sollwert steuern. Weiterhin kann der jeweils vorgewählte Sollwert auch mithilfe des Vorwahlmittels in einem vorgegebenen Temperaturbereich veränderbar sein.

Die Auswahl des jeweiligen Sollwertes kann mit konventionellen Mitteln erfolgen. Die in Fig.1 dargestellte Kaffeemaschine 100 weist beispielsweise ein Vorwahlmittel 70 zum Vorwählen eines Sollwertes der Temperatur eines aus der Kaffee-Ausgabeleitung 40 ausgegebenen Kaffeegetränks auf, welches als Tastatur mit mehreren Tasten 70.2 realisiert ist. Die Tasten 70.2 sind jeweils verschiedenen Sollwerten der Temperatur eines aus der Kaffee-Ausgabeleitung 40 ausgegebenen Kaffeegetränks zugeordnet, beispielsweise verschiedenen Werten in einem Temperaturbereich zwischen 80°C und 95°C. Durch Drücken der jeweiligen Tasten 70.2 kann demnach der jeweilige Sollwert stufenweise verändert werden. Wie Fig. 1 andeutet, ist das Vorwahlmittel 70 mit der Steuereinheit 29 mittels einer Verbindung 70.1 verbunden, sodass ein mittels der Tasten 70.2 ausgewählter Sollwert an die Steuereinheit 29 übermittelt werden kann und dieser Sollwert von der Steuereinheit 29 beim Steuern des Kaffee-Nacherhitzers 50 bzw. beim Steuern des durch das Heizelement 54 fliessenden Stroms berücksichtigt werden kann.

Das Vorwahlmittel 70 kann selbstverständlich durch Vorwahlmittel anderer Bauart ersetzt werden, beispielsweise durch einen Drehknopf, einen Schieberegler, einen berührungsempfindlichen Bildschirm, eine numerische Tastatur zur Eingabe des jeweiligen Sollwerts oder andere Mittel, welche eine kontinuierliche oder schrittweise Veränderung des Sollwerts ermöglichen.

Der Kaffee-Nacherhitzer 50 kann im Rahmen der vorliegenden Erfindung auch durch einen Durchlauferhitzer anderer Bauart ersetzt werden, beispielsweise durch ein rohrförmiges Heizglaselement (z.B. in Form eines Rohres aus Glas mit integrierten Heizwiderständen aus Draht) oder durch ein induktiv heizbares Rohr.

## Patentansprüche

1. Kaffeemaschine (100) zum Bereiten eines gebrühten Kaffeegetränks und zum Ausgeben des gebrühten Kaffeegetränks über mindestens einen Kaffee-Auslass (47), welche aufweist:
eine Brühvorrichtung (10) zum Bereiten des gebrühten Kaffeegetränks durch Brühen einer vorgegebenen Menge Kaffee in unter Druck stehendem Brühwasser, welche Brühvorrichtung (10) eine Brüheinheit (30) mit einer Brühkammer (36) zur Aufnahme der vorgegebenen Menge Kaffee, eine mit der Brüheinheit (30) verbundenen, in die Brühkammer mündende Brühwasser-Zufuhrleitung (31) zum Zuführen des Brühwassers in die Brühkammer und eine Einrichtung (20, 23, 28) zum Einleiten des Brühwassers in die Brühkammer (36) umfasst,
welche Einrichtung (20, 23, 28) zum Einleiten des Brühwassers dazu ausgebildet ist, das Brühwasser unter Druck durch die Brühwasser-Zufuhrleitung (31) in die Brühkammer (36) einzuleiten,
wobei die Brühkammer (36) einen Ausgang (37) für das gebrühte Kaffeegetränk aufweist und die Brühvorrichtung (10) eine Kaffee-Ausgabeleitung (40) umfasst, welche Kaffee-Ausgabeleitung (40) eine durchgehende Fluidverbindung für das gebrühte Kaffeegetränk zwischen dem Ausgang (37)) der Brühkammer (36) und dem Kaffee-Auslass (47) bildet,
wobei die Kaffee-Ausgabeleitung (40) ein erstes Ende (40-1) aufweist, welches an den Ausgang (37) der Brühkammer angeschlossen ist und einen mit dem Ausgang der Brühkammer in Fluidverbindung stehenden Eingang zur Aufnahme des gebrühten Kaffeegetränks umfasst, und ein zweites Ende (40-2) aufweist, welches einen mit dem Kaffee-Auslass (47) in Fluidverbindung stehenden Ausgang zur Ausgabe des gebrühten Kaffeegetränks umfasst,
**dadurch gekennzeichnet, dass**
die Brühvorrichtung (10) einen Kaffee-Nacherhitzer (50) zum Nacherhitzen des jeweils gebrühten Kaffeegetränks in der Kaffee-Ausgabeleitung (40) aufweist, wobei der Kaffee-Nacherhitzer (50) zwischen dem Ausgang der Brühkammer und dem Kaffee-Auslass angeordnet ist und als Durchlauferhitzer zum Erhitzen des gebrühten.Kaffeegetränks während eines Durchlaufs des gebrühten Kaffeegetränks durch die Kaffee-Ausgabeleitung (40) ausgebildet ist.

2. Kaffeemaschine (100) nach Anspruch 1,
wobei die Brühvorrichtung (10) ferner mindestens eine Einrichtung (22) zum Erkennen einer Wasserzufuhr zu der Brüheinheit (30) und/oder mindestens eine Einrichtung zum Erkennen einer Kaffeegetränkzufuhr in die Kaffee-Ausgabeleitung (40) aufweist.

3. Kaffeemaschine (100) (10) nach Anspruch 2,
wobei die Brühvorrichtung (10) ferner eine Steuereinheit (29) aufweist, welche mit der mindestens einen Einrichtung zum Erkennen einer Wasserzufuhr zu der Brüheinheit (30) und/oder mit der mindestens einen Einrichtung zum Erkennen einer Kaffeegetränkzufuhr in die Kaffee-Ausgabeleitung (40) verbunden ist,
wobei die Steuereinheit (29) ausgelegt ist, den Kaffee-Nacherhitzer (50) dann in Betrieb zu setzen, wenn erkannt wird, dass Wasser der Brüheinheit (30) zugeführt wird, oder
wobei die Steuereinheit (29) ausgelegt ist, den Kaffee-Nacherhitzer (50) dann in Betrieb zu setzen, wenn erkannt wird, dass ein Kaffeegetränk der Kaffee-Ausgabeleitung (40) zugeführt wird.

4. Kaffeemaschine (100) nach Anspruch 2,
wobei die Brühvorrichtung (10) ferner eine Steuereinheit (29) aufweist, welche mit der mindestens einen Einrichtung zum Erkennen einer Wasserzufuhr zu der Brüheinheit (30) und/oder mit der mindestens einen Einrichtung zum Erkennen einer Kaffeegetränkzufuhr in die Kaffee-Ausgabeleitung (40) verbunden ist, wobei die Steuereinheit (29) ausgelegt ist, den Kaffee-Nacherhitzer (50) dann in Betrieb zu setzen, wenn erkannt wird, dass die Zufuhr von Wasser zu der Brüheinheit (30) oder die Zufuhr von Kaffeegetränk in die Kaffee-Ausgabeleitung (40) beendet ist.

5. Kaffeemaschine (100) nach einem der Ansprüche 3 oder 4, mit einem Vorwahlmittel (70) zum Vorwählen eines Sollwertes der Temperatur, welche ein aus der Kaffee-Ausgabeleitung (40) ausgegebenes Kaffeegetränk aufweist, wobei der jeweils vorgewählte Sollwert mithilfe des Vorwahlmittels (70) in einem vorgegebenen Temperaturbereich veränderbar ist und der Kaffee-Nacherhitzer (50) mittels der Steuereinheit (29) in Abhängigkeit von dem jeweils vorgewählten Sollwert steuerbar ist.

6. Kaffeemaschine (100) nach einem der Ansprüche 3-5, mit einem oder mehreren Temperatursensoren (48) zur Bereitstellung eines Messwerts für eine Temperatur der Kaffee-Ausgabeleitung (40), wobei der Kaffee-Nacherhitzer (50) mittels der Steuereinheit (29) in Abhängigkeit von dem jeweils bereitgestellten Messwert für die jeweilige Temperatur der Ausgabeleitung (40) steuerbar ist.

7. Kaffeemaschine (100) nach Anspruch 6, wobei mindestens einer der jeweiligen Temperatursensoren (70) an einem ausgabeseitigen Endbereich (42) der Kaffee-Ausgabeleitung (40) oder an einem Bereich der Kaffee-Ausgabeleitung (40) zwischen dem Kaffee-Nacherhitzer (50) und dem ausgabeseitigen Endbereich (42) der Kaffee-Ausgabeleitung (40) oder am Kaffee-Nacherhitzer (50) angeordnet ist.

8. Kaffeemaschine (100) nach einem der vorhergehenden Ansprüche,
wobei der Kaffee-Nacherhitzer (50) einen Kaffee-Zufuhranschluss (51) und einen Kaffee-Ausgabeanschluss (52) sowie ein Heizelement (50) mit mindestens einem Stromanschluss (53) aufweist, und wobei der Kaffee-Zufuhranschluss (51) und der Kaffee-Ausgabeanschluss (52) in jeweils gegenüberliegenden Enden eines benachbart zu dem Heizelement (54) verlaufenden Rohres (61) münden.

9. Kaffeemaschine (100) nach Anspruch 8,
wobei das Rohr (61) mit dem benachbart verlaufenden Heizelement (54) zumindest bereichsweise fest verbunden und/oder verschweisst und/oder verklebt ist.

10. Kaffeemaschine (100) nach einem der Ansprüche 8 oder 9, wobei der Kaffee-Nacherhitzer (50) ferner ein Gehäuse (55) aus einem wärmeleitenden Material aufweist, wobei das Gehäuse (55) derart ausgebildet ist, dass das wärmeleitende Material des Gehäuses (55) zumindest bereichsweise das Rohr (61) und das Heizelement (54) umgibt.

11. Kaffeemaschine (100) nach einem der Ansprüche 8 bis 10, wobei das Rohr (61) aus Chromstahl oder aus Aluminium besteht.

12. Kaffeemaschine (100) nach einem der Ansprüche 8 bis 11, wobei das Heizelement (54) eine keramische Dickschichtheizung oder ein PTC-Heizwiderstand ist.

13. Kaffeemaschine (100)nach einem der Ansprüche 1 bis 12, welche einen Wassertank (20), einen Brühwassererhitzer (24), eine Pumpe (23), ein Auslaufventil (27) und eine Kaffee-Ausgabeeinrichtung (45) aufweist, wobei die Brühwasser-Zufuhrleitung (31) der Brühvorrichtung (10) mit der Pumpe (23) und der ausgabeseitige Endbereich (42) der Kaffee-Ausgabeleitung (40) mit der Kaffee-Ausgabeeinrichtung (45) verbunden sind.

14. Verfahren zum Brühen und Ausgeben eines Kaffeegetränkes mittels einer Kaffeemaschine (100) nach einem der Ansprüche 1-13, welches Verfahren die folgenden Verfahrensschritte aufweist:
a) die Brüheinheit (30) wird in einen brühbereiten Zustand versetzt;
b) auf Brühtemperatur erhitztes Brühwasser wird durch die Brühwasser-Zufuhrleitung (31) dem Brühwassereingang der Brüheinheit (30) zugeführt;
c) in der Brüheinheit (30) wird ein Kaffeegetränk gebrüht;
d) das gebrühte Kaffeegetränk wird in die Kaffee-Ausgabeleitung (40) ausgegeben, sodass das Kaffeegetränk die Kaffee-Ausgabeleitung durchfliesst; und
e) der Kaffee-Nacherhitzer (50) wird in Betrieb gesetzt und erhitzt das die Kaffee-Ausgabeleitung (40) durchfliessende Kaffeegetränk.

15. Verfahren nach Anspruch 14,
wobei die Brühvorrichtung (10) ferner mindestens eine Einrichtung (22) zum Erkennen einer Wasserzufuhr zu der Brüheinheit (30) und/oder mindestens eine Einrichtung zum Erkennen einer Kaffeegetränkzufuhr in die Kaffee-Ausgabeleitung (40) aufweist,
wobei der Verfahrensschritt e) durchgeführt wird, wenn erkannt wird, dass Wasser der Brüheinheit (30) zugeführt wird, oder
wobei der Verfahrensschritt e) durchgeführt wird, wenn erkannt wird, dass ein Kaffeegetränk der Kaffee-Ausgabeleitung (40) zugeführt wird.

16. Verfahren nach Anspruch 14,
wobei die Brühvorrichtung (10) ferner mindestens eine Einrichtung (22) zum Erkennen einer Wasserzufuhr zu der Brüheinheit (30) und/oder mindestens eine Einrichtung zum Erkennen einer Kaffeegetränkzufuhr in die Kaffee-Ausgabeleitung (40) aufweist,
wobei der Verfahrensschritt e) durchgeführt wird, wenn erkannt wird, dass die Zufuhr von Wasser zu der Brüheinheit (30) oder die Zufuhr von Kaffeegetränk in die Kaffee-Ausgabeleitung (40) beendet ist.

## Claims

1. The coffee machine (100) for preparing a brewed coffee beve0rage and for dispensing the brewed coffee beverage via at least one coffee outlet (47), which encompasses:
a brewing device (10) for preparing the brewed coffee beverage by brewing a predefined amount of coffee in pressurized brewing water, said brewing device (10) comprises a brewing unit (30) having a brewing chamber (36) for accommodating the predefined amount of coffee, a brewing water supply line (31), which is connected to the brewing unit (30) and which opens into the brewing chamber, for feeding the brewing water into the brewing chamber, and a device (20, 23, 28) for introducing the brewing water into the brewing chamber (36),
said device (20, 23, 28) for introducing the brewing water is designed to introduce the brewing water into the brewing chamber (36) under pressure through the brewing water supply line (31),
wherein the brewing chamber (36) encompasses an outlet (37) for the brewed coffee beverage, and the brewing device (10) comprises a coffee dispensing line (40), said coffee dispensing line (40) forms a continuous fluid connection for the brewed coffee beverage between the outlet (37) of the brewing chamber (36) and the coffee outlet (47),
wherein the coffee dispensing line (40) encompasses a first end (40-1), which is connected to the outlet (37) of the brewing chamber, and which comprises an inlet for accommodating the brewed coffee beverage, which is in fluid connection with the outlet of the brewing chamber, and encompasses a second end (40-2), which comprises an outlet, which is in fluid connection with the coffee outlet (47), for dispensing the brewed coffee beverage,
**characterized in that**
the brewing device (10) encompasses a coffee post-heater (50) for post-heating the respective brewed coffee beverage in the coffee dispensing line (40), wherein the coffee post-heater (50) is arranged between the outlet of the brewing chamber and the coffee outlet, and is designed as a flow-through heater for heating the brewed coffee beverage while the brewed coffee beverage flows through the coffee dispensing line (40).

2. The coffee machine (100) according to claim 1,
wherein the brewing device (10) further encompasses at least one device (22) for identifying a water supply to the brewing unit (30) and/or at least one device for identifying a coffee beverage supply into the coffee dispensing line (40).

3. The coffee machine (100) according to claim 2,
wherein the brewing device (10) further encompasses a control unit (29), which is connected to the at least one device for identifying a water supply to the brewing unit (30) and/or to the at least one device for identifying a coffee beverage supply into the coffee dispensing line (40),
wherein the control unit (29) is designed to start up the coffee post-heater (50) when it is identified that water is fed to the brewing unit (30), or
wherein the control unit (29) is designed to start up the coffee post-heater (50) when it is identified that a coffee beverage is fed to the coffee dispensing line (40).

4. The coffee machine (100) according to claim 2,
wherein the brewing device (10) further encompasses a control unit (29), which is connected to the at least one device for identifying a water supply to the brewing unit (30) and/or to the at least one device for identifying a coffee beverage supply into the coffee dispensing line (40), wherein the control unit (29) is designed to start up the coffee post-heater (50) when it is identified that the supply of water to the brewing unit (30) or the supply of a coffee beverage into the coffee dispensing line (40) has ended.

5. The coffee machine (100) according to one of claims 3 or 4, comprising a preselection means (70) for preselecting a setpoint value of the temperature of a coffee beverage, which is dispensed from the coffee dispensing line (40), wherein the respective preselected setpoint value can be changed within a predefined temperature range by means of the preselection means (70) and the coffee post-heater (50) can be controlled by means of the control unit (29) as a function of the respective preselected setpoint value.

6. The coffee machine (100) according to one of claims 3-5, having one or a plurality of temperature sensors (48) for providing a measuring value for a temperature of the coffee dispensing line (40), wherein the coffee post-heater (50) can be controlled by means of the control unit (29) as a function of the respective provided measuring value for the respective temperature of the dispensing line (40).

7. The coffee machine (100) according to claim 6, wherein at least one of the respective temperature sensors (70) is arranged on an end area (42) of the coffee dispensing line (40) on the dispensing side, or on an area of the coffee dispensing line (40) between the coffee post-heater (50) and the end area (42) of the coffee dispensing line (40) on the dispensing side or on the coffee post-heater (50).

8. The coffee machine (100) according to one of the preceding claims,
wherein the coffee post-heater (50) encompasses a coffee supply connection (51) and a coffee dispensing connection (52) as well as a heating element (50) having at least one power connection (53), and wherein the coffee supply connection (51) and the coffee dispensing connection (52) in each case open into opposite ends of a tube (61), which runs adjacent to the heating element (54).

9. The coffee machine (100) according to claim 8,
wherein the tube (61) is fixedly connected and/or fused and/or adhered at least area by area to the heating element (54), which runs adjacent thereto.

10. The coffee machine (100) according to one of claims 8 or 9, wherein the coffee post-heater (50) further encompasses a housing (55) made of a heat-conducting material, wherein the housing (55) is designed such that the heat-conducting material of the housing (55) surrounds the tube (61) and the heating element (54) at least area by area.

11. The coffee machine (100) according to one of claims 8 to 10, wherein the tube (61) consists of chromium steel or of aluminium.

12. The coffee machine (100) according to one of claims 8 to 11, wherein the heating element (54) is a ceramic thick film heater or a PTC heating resistor.

13. The coffee machine (100) according to one of claims 1 to 12, which encompasses a water tank (20), a brewing water heater (24), a pump (23), a drain valve (27) and a coffee dispensing device (45), wherein the brewing water supply line (31) of the brewing device (10) is connected to the pump (23) and the end area (42) of the coffee dispensing line (40) on the dispensing side is connected to the coffee dispensing device (45).

14. A method for brewing and dispensing a coffee beverage by means of a coffee machine (100) according to one of claims 1-13, said method encompasses the following method steps:
a) the brewing unit (30) is put into a brew-ready state;
b) brewing water heated to brewing temperature is fed to the brewing water inlet of the brewing unit (30) through the brewing water supply line (31);
c) a coffee beverage is brewed in the brewing unit (30);
d) the brewed coffee beverage is dispensed into the coffee dispensing line (40), so that the coffee beverage flows through the coffee dispensing line; and
e) the coffee post-heater (50) is started up and heats the coffee beverage, which flows through the coffee dispensing line (40).

15. The method according to claim 14,
wherein the brewing device (10) further encompasses at least one device (22) for identifying a water supply to the brewing unit (30) and/or at least one device for identifying a coffee beverage supply into the coffee dispensing line (40),
wherein method step e) is carried out when it is identified that water is fed to the brewing unit (30), or
wherein method step e) is carried out when it is identified that a coffee beverage is fed to the coffee dispensing line (40).

16. The method according to claim 14,
wherein the brewing device (10) further encompasses at least one device (22) for identifying a water supply to the brewing unit (30) and/or at least one device for identifying a coffee beverage supply into the coffee dispensing line (40),
wherein the method step e) is carried out when it is identified that the supply of water to the brewing unit (30) or the supply of a coffee beverage into the coffee dispensing line (40) has ended.

## Revendications

1. Machine à café (100) destinée à préparer une boisson infusée à base de café et à distribuer la boisson infusée à base de café par l'intermédiaire d'au moins une sortie de café (47), laquelle comporte :
un dispositif d'infusion (10) destiné à préparer la boisson infusée à base de café par infusion d'une quantité prédéfinie de café dans de l'eau d'infusion sous pression, lequel dispositif d'infusion (10) comprend une unité d'infusion (30) avec une chambre d'infusion (36) destinée à recevoir la quantité prédéfinie de café, un conduit d'alimentation (31) d'eau d'infusion relié avec l'unité d'infusion (30), débouchant dans la chambre d'infusion pour alimenter l'eau d'infusion dans la chambre d'infusion et un système (20, 23, 28) destiné à introduire l'eau d'infusion dans la chambre d'infusion (36),
lequel système (20, 23, 28) destiné à introduire l'eau d'infusion étant conçu pour introduire l'eau d'infusion sous pression via le conduit d'alimentation (31) d'eau d'infusion dans la chambre d'infusion (36),
la chambre d'infusion (36) comprenant une sortie (37) pour la boisson infusée à base de café et le dispositif d'infusion (10) comprenant un conduit distributeur (40) de café, lequel conduit distributeur (40) de café formant une liaison traversante par fluide pour la boisson infusée à base de café entre la sortie (37) de la chambre d'infusion (36) et la sortie (47) de café,
le conduit distributeur (40) de café comportant une première extrémité (40-1), laquelle est raccordée sur la sortie (37) de la chambre d'infusion et comprenant une entrée se trouvant en liaison par fluide avec la sortie de la chambre d'infusion, pour recevoir la boisson infusée à base de café et une deuxième extrémité (40-2) qui comprend une sortie se trouvant en liaison par fluide avec la sortie (47) de café, pour distribuer la boisson infusée à base de café,
**caractérisée en ce que**
le dispositif d'infusion (10) comporte un réchauffeur (50) de café pour réchauffer la boisson infusée à base de café concernée dans le conduit distributeur (40) de café, le réchauffeur (50) de café étant placé entre la sortie de la chambre d'infusion et la sortie de café et étant conçu en tant que chauffe-eau instantané pour chauffer la boisson infusée à base de café pendant un passage de la boisson instantanée à base de café à travers le conduit distributeur (40) de café.

2. Machine à café (100) selon la revendication 1
le dispositif d'infusion (10) comportant en outre un système (22) destiné à détecter une alimentation d'eau vers l'unité d'infusion (30) et/ou au moins un système destiné à détecter une alimentation de boisson au café dans le conduit distributeur (40) de café.

3. Machine à café (100) selon la revendication 2,
le dispositif d'infusion (10) comportant en outre une unité de commande (29), laquelle est reliée avec l'au moins un système destiné à détecter une alimentation d'eau vers l'unité d'infusion (30) et/ou avec l'au moins un système destiné à détecter une alimentation de boisson au café dans le conduit distributeur (40) de café,
l'unité de commande (29) étant conçue pour mettre en service le réchauffeur (50) de café lorsqu'il est détecté que de l'eau est alimentée vers l'unité d'infusion (30),
l'unité de commande (29) étant conçue pour mettre en service le réchauffeur (50) de café lorsqu'il est détecté qu'une boisson au café est alimentée vers le conduit distributeur (40) de café.

4. Machine à café (100) selon la revendication 2,
le dispositif d'infusion (10) comportant en outre une unité de commande (29), laquelle est reliée avec l'au moins un système destiné à détecter une alimentation d'eau vers l'unité d'infusion (30) et/ou avec l'au moins un système destiné à détecter une alimentation de boisson au café dans le conduit distributeur (40) de café, l'unité de commande (29) étant conçue pour mettre en service le réchauffeur (50) de café lorsqu'il est détecté que l'alimentation d'eau vers l'unité d'infusion (30) ou l'alimentation de boisson au café vers le conduit distributeur (40) de café a pris fin.

5. Machine à café (100) selon l'une quelconque des revendications 3 ou 4, avec un moyen de présélection (70) pour présélectionner une valeur de consigne de la température que présente une boisson au café distribuée par le conduit distributeur (40) de café, la valeur de consigne respectivement présélectionnée à l'aide du moyen de présélection (70) étant variable dans un ordre de températures prédéfini et le réchauffeur (50) de café étant pilotable au moyen de l'unité de commande (29), en fonction de la valeur de consigne respectivement présélectionnée.

6. Machine à café (100) selon l'une quelconque des revendications 3 à 5, avec un pour plusieurs capteur (s) de température pour la mise à disposition d'une valeur de mesure pour une température du conduit distributeur (40) de café, le réchauffeur (50) de café étant pilotable au moyen de l'unité de commande (29) en fonction de la valeur de mesure respectivement mis à disposition pour la température respective du conduit distributeur (40).

7. Machine à café (100) selon la revendication 6, au moins l'un des capteurs de température (70) respectifs étant placé dans une zone d'extrémité (42) du côté distribution du conduit distributeur (40) de café ou sur une zone du conduit distributeur (40) entre le réchauffeur (50) de café et la zone d'extrémité (42) du côté distribution du conduit distributeur (40) de café ou sur le réchauffeur (50) de café.

8. Machine à café (100) selon l'une quelconque des revendications précédentes,
le réchauffeur (50) de café comportant un raccord d'alimentation (51) de café et un raccord de distribution (52) de café, ainsi qu'un élément chauffant (50) avec au moins un raccord électrique (53) et le raccord d'alimentation (51) de café et le raccord de distribution (52) de café débouchant dans des extrémités chaque fois opposées d'un tube (61) s'étendant au voisinage de l'élément chauffant (54).

9. Machine à café (100) selon la revendication 8,
le tube (61) étant fixement relié et/ou soudé et/ou collé au moins par sections avec l'élément chauffant (54) s'étendant à son voisinage.

10. Machine à café (100) selon l'une quelconque des revendications 8 ou 9,
le réchauffeur (50) de café comportant par ailleurs un corps (55) en une matière conductrice thermique, le corps (55) étant conçu de telle sorte que la matière conductrice thermique du corps (55) entoure au moins par sections le tube (61) et l'élément chauffant (54).

11. Machine à café (100) selon l'une quelconque des revendications 8 à 10, le tube (61) étant constitué d'acier chromé ou d'aluminium.

12. Machine à café (100) selon l'une quelconque des revendications 8 à 11, l'élément chauffant (54) étant un chauffage céramique à couche épaisse ou une résistance chauffante en PTC.

13. Machine à café (100) selon l'une quelconque des revendications 1 à 12, laquelle comporte un réservoir à eau (20), un système de chauffe (24) de l'eau d'infusion, une pompe (23), une soupape d'écoulement (27) et un système distributeur (45) de café, le conduit d'alimentation (31) d'eau d'infusion du dispositif d'infusion (10) étant relié avec la pompe (23) et la zone d'extrémité (42) du coté distribution du conduit distributeur (40) de café étant reliée avec le système distributeur (45) de café.

14. Procédé d'infusion et de distribution d'une boisson à base de café au moyen d'une machine à café (100) selon l'une quelconque des revendications 1 à 13, lequel procédé comportant les étapes de procédé suivantes :
a) l'unité d'infusion (30) est placée dans un état prêt à infuser ;
b) de l'eau chauffée à la température d'infusion est alimentée via le conduit distributeur (31) d'eau d'infusion vers l'entrée d'eau infusée de l'unité d'infusion (30) ;
c) dans l'unité d'infusion (30) est infusée une boisson à base de café ;
d) la boisson infusée à base de café est distribuée dans le conduit distributeur (40) de café, de sorte que la boisson à base de café s'écoule à travers le conduit distributeur de café ; et
e) le réchauffeur (50) de café est mis en service et réchauffe la boisson à base de café s'écoulant à travers le conduit distributeur (40) de café.

15. Procédé selon la revendication 14,
le dispositif d'infusion (10) comportant en outre au moins un système (22) destiné à détecter une alimentation d'eau vers l'unité d'infusion (30) et/ou au moins un système destiné à détecter une alimentation de boisson à base de café dans le conduit distributeur (40) de café ;
l'étape de procédé e) étant réalisée lorsqu'il est détecté que de l'eau est alimentée vers l'unité d'infusion (30) ou
l'étape de procédé e) étant réalisée lorsqu'il est détecté qu'un boisson à base de café est alimentée vers le conduit distributeur (40) de café.

16. Procédé selon la revendication 14,
le dispositif d'infusion (10) comportant en outre au moins un système (22) destiné à détecter une alimentation d'eau vers l'unité d'infusion (30) et/ou au moins un système destiné à détecter une alimentation de boisson à base de café dans le conduit distributeur (12) de café,
l'étape de procédé e) étant réalisée lorsqu'il est détecté que l'alimentation d'eau vers l'unité d'infusion (30) ou l'alimentation de boisson à base de café dans le conduit distributeur (40) de café a pris fin.
